# EUROPÄISCHE PATENTSCHRIFT

(11) **EP 2 886 928 B1**
(45) Veröffentlichungstag und Bekanntmachung des Hinweises auf die Patenterteilung: **09.01.2019**
(21) Anmeldenummer: 14194455.3
(22) Anmeldetag: 24.11.2014
(51) Int. Cl.: F16M 11/10, G06F 1/16

(54) **Rechnergehäuse, Rechner mit solch einem Rechnergehäuse und ein Bediensystem mit solch einem Rechner**
Computer case, computer with such a computer case and a control system with such a computer
Boîtier d'ordinateur, ordinateur doté d'un tel boîtier d'ordinateur et système de commande ayant un tel ordinateur

(30) Priorität: 25.11.2013 DE 102013224041
(43) Veröffentlichungstag der Anmeldung: 24.06.2015
(73) Patentinhaber: Beckhoff Automation GmbH, 33415 Verl (DE)
(72) Erfinder: GREISER, Frank, 33378 Rheda-Wiedenbrück (DE)
(74) Vertreter: Patentanwaltskanzlei WILHELM & BECK

(56) Entgegenhaltungen:
- EP-A1- 2 110 734
- DE-A1-102011 086 196
- DE-C2- 19 742 373
- DE-U1- 8 800 440

## Beschreibung

Die Erfindung betrifft ein Rechnergehäuse, einen Rechner mit solch einem Rechnergehäuse und ein Bediensystem mit solch einem Rechner, wobei das Rechnergehäuse eine Gehäusewandung zur Umschließung eines Gehäuseinnenraums umfasst, wobei die Gehäusewandung einen ersten Wandungsabschnitt, einen zweiten Wandungsabschnitt und einen dritten Wandungsabschnitt aufweist, wobei der erste Wandungsabschnitt einen ersten Gehäuseinnenraumabschnitt, der zweite Wandungsabschnitt einen zweiten Gehäuseinnenraumabschnitt und der dritte Wandungsabschnitt einen dritten Gehäuseinnenraumabschnitt teilweise umschließen, wobei jeder Gehäuseinnenraumabschnitt ausgebildet ist, eine Komponente eines Rechners aufzunehmen, wobei der zweite Wandungsabschnitt und der dritte Wandungsabschnitt beabstandet zueinander angeordnet sind, wobei der zweite Wandungsabschnitt und der dritte Wandungsabschnitt angrenzend am ersten Wandungsabschnitt angeordnet sind und sich von dem ersten Wandungsabschnitt weg erstrecken.

Aus der DE 10 2009 051 610 A1 ist eine Bedienstation mit einem Rechner, einer Kupplung und einem Tragarm zur Bedienung von Maschinen und Industrieanlagen bekannt. Die Kupplung ist quer zu einer Schwerkraftrichtung zwischen dem Tragarm und dem Rechner angeordnet, so dass hohe Kräfte und Momente aus dem Rechner durch die Kupplung aufgenommen und an den Tragarm übertragen werden müssen.

Ferner ist aus der DE 197 42 373 C2 ein Rechnergehäuse bekannt.

Es ist Aufgabe der Erfindung, ein verbessertes Rechnergehäuse, einen verbesserten Rechner mit solch einem Rechnergehäuse und ein verbessertes Bediensystem mit solch einem Rechner bereitzustellen.

Die Aufgabe ein verbessertes Rechnergehäuse bereitzustellen wird mittels eines Rechnergehäuses gemäß Anspruch 1 gelöst. Vorteilhafte Ausführungsformen sind in den abhängigen Ansprüchen angegeben.

Erfindungsgemäß wurde erkannt, dass ein verbessertes Rechnergehäuse zur Bedienung einer Anlage dadurch bereitgestellt werden kann, dass das Rechnergehäuse eine Gehäusewandung zur Umschließung eines Gehäuseinnenraums mit einem ersten, einem zweiten und einem dritten Gehäuseinnenraumabschnitt umfasst. Die Gehäusewandung umfasst einen ersten Wandungsabschnitt, einen zweiten Wandungsabschnitt und einen dritten Wandungsabschnitt. Der erste Wandungsabschnitt umschließt zumindest teilweise den ersten Gehäuseinnenraumabschnitt, der zweite Wandungsabschnitt zumindest teilweise den zweiten Gehäuseinnenraumabschnitt und der dritte Wandungsabschnitt zumindest teilweise den dritten Gehäuseinnenraumabschnitt. Jeder der Gehäuseinnenraumabschnitte des Gehäuseinnenraums ist ausgebildet, eine Komponente eines Rechners aufzunehmen. Der zweite Wandungsabschnitt und der dritte Wandungsabschnitt sind beabstandet zueinander angeordnet,
wobei der zweite Wandungsabschnitt und der dritte Wandungsabschnitt angrenzend am ersten Wandungsabschnitt angeordnet sind und sich von dem ersten Wandungsabschnitt weg erstrecken

Diese Ausgestaltung hat den Vorteil, dass zwischen dem zweiten Wandungsabschnitt und dem dritten Wandungsabschnitt ein Tragarm zur Befestigung des Rechnergehäuses an einer Wand oder einer Decke angeordnet werden kann. Der im Wesentlich U-förmige Querschnitt des Rechnergehäuses bewirkt somit einen gegenüber dem Stand der Technik in Richtung des Tragarms verlegten Schwerpunkt, so dass Kräfte und Momente zur Abstützung des Rechnergehäuses am Tragarm reduziert sind.

In einer weiteren Ausführungsform ist an wenigstens einem der Wandungsabschnitte zumindest ein Kühlelement vorgesehen, das ausgebildet ist, einen Wärmeeintrag durch eine zum Wandungsabschnitt korrespondierenden Gehäuseinnenraum angeordnete Komponente aus dem Gehäuseinnenraum abzuleiten und die Komponente zu kühlen. Dadurch kann eine Überhitzung der Komponente des Rechners vermieden werden.

Besonders vorteilhaft ist hierbei, wenn zumindest an dem zweiten Wandungsabschnitt und/oder an dem dritten Wandungsabschnitt ein Kühlelement vorgesehen ist, wobei jedes Kühlelement wenigstens eine Kühllamelle aufweist, wobei die Kühllamelle sich jeweils in Richtung des gegenüberliegenden Kühlelements erstreckt. Verläuft noch dazu das Kühlelement im Wesentlichen in Schwerkraftrichtung, stellt sich ein Kamineffekt ein, sodass eine besonders gute Kühlung der Komponenten des Rechners gewährleistet wird.

In einer weiteren Ausführungsform umfasst der erste Wandungsabschnitt auf einer dem zweiten und/oder dritten Wandungsabschnitt abgewandten Seite einen ersten Befestigungsabschnitt zur Befestigung eines Peripheriegeräts, insbesondere eines Bildschirms, und/oder eine erste Schnittstellenanbindung, wobei die erste Schnittstellenanbindung ausgebildet ist, eine Verbindung zwischen wenigstens einer in dem Gehäuseinnenraum angeordneten Komponente des Rechners und dem Peripheriegerät bereitzustellen. Dadurch wird sowohl eine elektrische Energieversorgung als auch eine Datenverbindung des Peripheriegeräts mit dem Rechner gewährleistet und gleichzeitig eine Befestigung des Peripheriegeräts an dem Rechnergehäuse sichergestellt.

In einer weiteren Ausführungsform weist der erste Wandungsabschnitt auf einer dem zweiten und/oder dritten Wandungsabschnitt zugewandten Seite eine zweite Schnittstellenanbindung auf, wobei die zweite Schnittstellenanbindung mit wenigstens einer der im Gehäuseinnenraum angeordneten Komponente des Rechners verbindbar ist. Dadurch können Datenleitungen und/oder eine elektrische Energieversorgung der Komponenten des Rechners über die zweite Schnittstellenanbindung aus dem Rechnergehäuse herausgeführt werden.

In einer weiteren Ausführungsform weist der erste Wandungsabschnitt auf einer dem zweiten und dritten Wandungsabschnitt zugewandten Seite zwischen dem zweiten und dem dritten Wandungsabschnitt einen zweiten Befestigungsabschnitt auf, wobei der zweite Befestigungsabschnitt ausgebildet ist, das Rechnergehäuse an einem Tragarm zu befestigen. Alternativ oder zusätzlich kann zwischen dem zweiten Wandungsabschnitt und dem dritten Wandungsabschnitt ein Verbindungssteg vorgesehen sein, der den zweiten Wandungsabschnitt mit dem dritten Wandungsabschnitt mechanisch koppelt. Auf diese Weise kann ein verbesserten Kraftfluss zwischen Tragarm und Rechnergehäusebereitgestellt werden. Besonders vorteilhaft ist hierbei, wenn der Verbindungssteg parallel und beabstandet zum ersten Wandungsabschnitt ausgerichtet ist.

Eine mechanische Beschädigung des Rechnergehäuses wird dadurch vermieden, dass der zweite und/dritte Wandungsabschnitt auf einer zum ersten Wandungsabschnitt abgewandten Seite eine bogenförmig ausgebildete Kontur aufweist, wobei die Kontur auf einer zum gegenüberliegenden Wandabschnitt zugewandten Seite einen größeren Abstand zum ersten Wandungsabschnitt aufweist als auf einer dem gegenüberliegenden Wandungsabschnitt abgewandten Seite.

In einer weiteren Ausführungsform ist der zweite und/oder dritte Wandungsabschnitt im Wesentlichen senkrecht zu dem ersten Wandungsabschnitt angeordnet. Diese Ausgestaltung ist besonders vorteilhaft, um das Rechnergehäuse besonders kostengünstig und einfach herstellen zu können.

In einer weiteren Ausführungsform umfasst die Gehäusewandung einen vierten Wandungsabschnitt, wobei der vierte Wandungsabschnitt mit dem zweiten und/oder dem dritten Wandungsabschnitt auf einer zum ersten Wandungsabschnitt gegenüberliegenden Seite verbunden ist. Der vierte Wandungsabschnitt begrenzt zumindest teilweise einen vierten Gehäuseinnenraumabschnitt. Der vierte Gehäuseinnenraumabschnitt ist ausgebildet, wenigstens eine Komponente, beispielsweise ein Netzgerät, aufzunehmen. Dadurch kann ein Schwerpunkt des Rechnergehäuses weiter zum Tragarm verlegt werden, sodass der Tragarm beziehungsweise ein Gelenk des Tragarms nur für reduzierte Momente ausgelegt werden muss.

Die Aufgabe einen verbesserten Rechner mit solch einem Rechnergehäuse bereitzustellen wird durch einen Rechner gemäß Anspruch 10 gelöst. Vorteilhafte Ausführungsformen sind in den abhängigen Ansprüchen angegeben.

Erfindungsgemäß wurde erkannt, dass ein verbesserter Rechner dadurch bereitgestellt werden kann, dass der Rechner ein Rechnergehäuse, wie bereits oben beschrieben, aufweist, wobei der Rechner zusätzlich zumindest eine Speichereinrichtung, wenigstens ein Netzgerät und wenigstens eine Leiterplatte als Komponenten aufweist. Die Komponenten sind in dem Gehäuseinnenraum angeordnet und zumindest teilweise miteinander elektrisch verbunden. Durch die Ausgestaltung des Rechnergehäuses können die Komponenten zuverlässig gegenüber der Umgebung geschützt werden und gleichzeitig eine zuverlässige Kühlung der Komponenten bereitgestellt werden.

In einer weiteren Ausführungsform ist das Netzgerät zumindest teilweise in dem ersten und/oder vierten Gehäuseinnenraumabschnitt angeordnet und mit der ersten Schnittstellenanbindung verbunden. Netzgeräte weisen üblicherweise eine hohe Masse auf, so dass der Schwerpunkt des Rechnergehäuses auf einfache Weise durch Verlagerung des Netzgeräts in Richtung des Tragarms ebenso in Richtung des Tragarms verlegt werden kann.

Besonders vorteilhaft ist, wenn die Speichereinrichtung und/oder die Leiterplatte im zweiten und/oder dritten Gehäuseinnenraumabschnitt angeordnet sind.

In einer weiteren Ausführungsform ist im Bereich der Leiterplatte wenigstens eine Lüftereinrichtung vorgesehen, wobei die Lüftereinrichtung ausgebildet ist, einen Kühlluftstrom zur Kühlung der Leiterplatte in dem zweiten und/oder dritten Gehäuseinnenraumabschnitt bereitzustellen. Dadurch kann intern eine Überhitzung der Leiterplatte zuverlässig vermieden werden, ohne dass dazu ein Luftstrom aus der Umgebung in das Rechnergehäuse geführt werden muss.

Die Aufgabe ein verbessertes Bediensystem mit solch einem Rechner bereitzustellen wird durch ein Bediensystem gemäß Anspruch 14 gelöst. Vorteilhafte Ausführungsformen sind in den abhängigen Ansprüchen angegeben.

Erfindungsgemäß wurde erkannt, dass ein verbessertes Bediensystem dadurch bereitgestellt werden kann, dass das Bediensystem einen Rechner, der wie oben beschrieben ausgebildet ist, umfasst. Zusätzlich umfasst das Bediensystem einen Tragarm, wobei der Tragarm zumindest teilweise zwischen dem zweiten und dem dritten Wandungsabschnitt geführt ist, wobei der Tragarm an dem zweiten Befestigungsabschnitt mit dem Rechnergehäuse verbunden ist. Dadurch kann eine besonders kompakte Ausgestaltung des Bediensystems bereitgestellt werden, wobei vorzugsweise der Tragarm ein Gelenk umfasst, um den Rechner um eine Tragarmachse zu schwenken und/oder um eine Gelenkachse zu verkippen. Durch die Ausgestaltung des Rechners kann der Schwerpunkt des Rechners gegenüber bekannten Systemen näher am Tragarm angeordnet werden, so dass der Tragarm im Gelenk gegenüber bekannten Bediensystemen ein geringeres Moment aus dem Rechner abstützen muss. Auch wird ein ungewolltes Verkippen und/oder Verschwenken des Rechners gegenüber dem Tragarm vermieden.

Besonders vorteilhaft ist, wenn ein Peripheriegerät, insbesondere ein Bildschirm vorgesehen ist, wobei das Peripheriegerät an dem ersten Befestigungsabschnitt mit dem Rechnergehäuse verbunden ist.

Ferner ist von Vorteil, wenn der zweite und/oder der dritte Wandungsabschnitt eine maximale Erstreckung senkrecht zum ersten Wandungsabschnitt aufweist, die größer ist als ein maximaler Abstand des Tragarms zu dem ersten Wandungsabschnitt senkrecht zum ersten Wandungsabschnitt. Dadurch wird vermieden, dass ein Bediener des Bediensystems an dem Tragarm im Bereich des Rechnergehäuses hängen bleibt.

In einer weiteren Ausführungsform ist an dem Tragarm eine Haube vorgesehen, wobei die Haube ausgebildet ist, den zweiten Befestigungsabschnitt und/oder die zweite Schnittstellenanbindung zumindest teilweise zu überdecken. Dadurch wird der zweite Befestigungsabschnitt und/oder die zweite Schnittstellenanbindung vor Verschmutzung geschützt.

Nachfolgend wird die Erfindung anhand von Figuren näher erläutert.

Dabei zeigen:
- Figur 1: eine perspektivische Rückansicht eines Bediensystems in teilmontiertem Zustand;
- Figur 2: eine perspektivische Rückansicht des in Figur 1 gezeigten Bediensystems in montiertem Zustand;
- Figur 3: eine Seitenansicht auf das in Figur 2 gezeigte Bediensystem;
- Figur 4: eine Draufsicht auf einen Rechner des in den Figuren 2 und 3 gezeigten Bediensystems;
- Figur 5: eine Rückansicht des in den Figur 1 gezeigten Bediensystems;
- Figur 6: eine Vorderansicht des in den Figuren 1 bis 5 gezeigten Bediensystems in teilmontiertem Zustand;

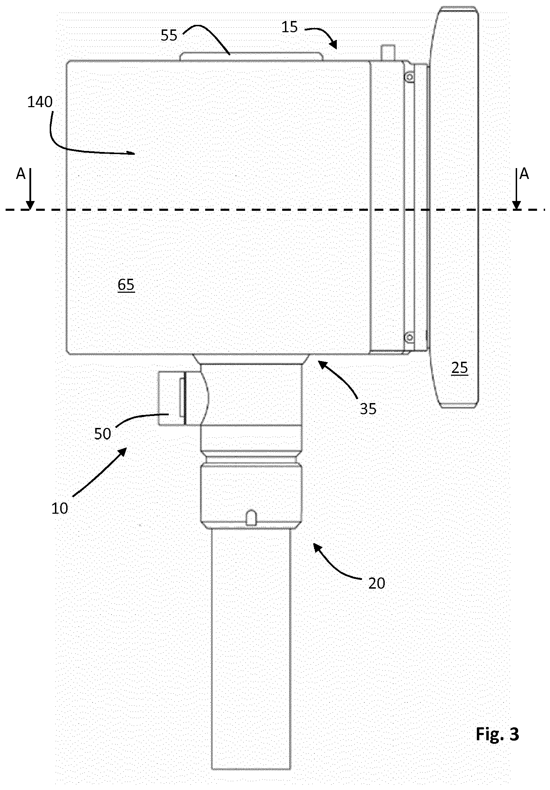

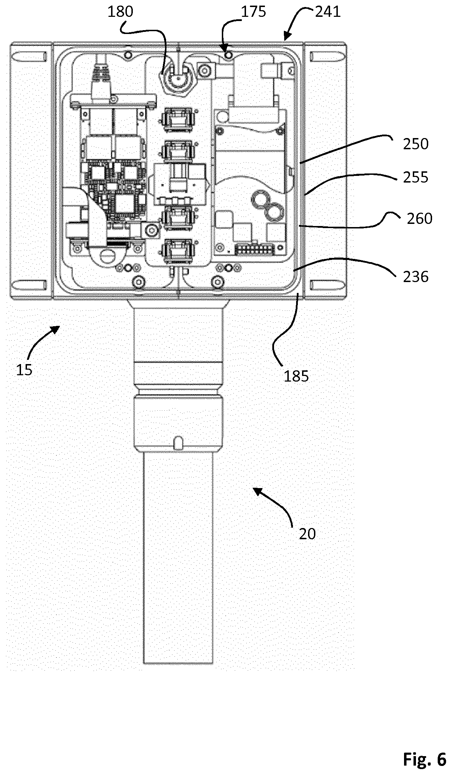

- Figur 6: eine Schnittansicht entlang einer in Figur 3 gezeigten Schnittebene A-A durch den in Figur 3 gezeigten Rechner;

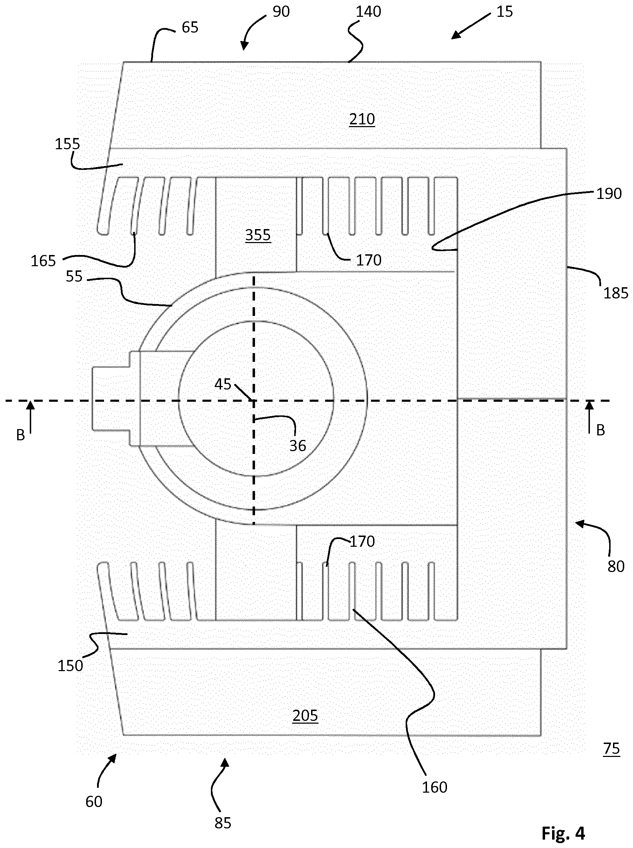

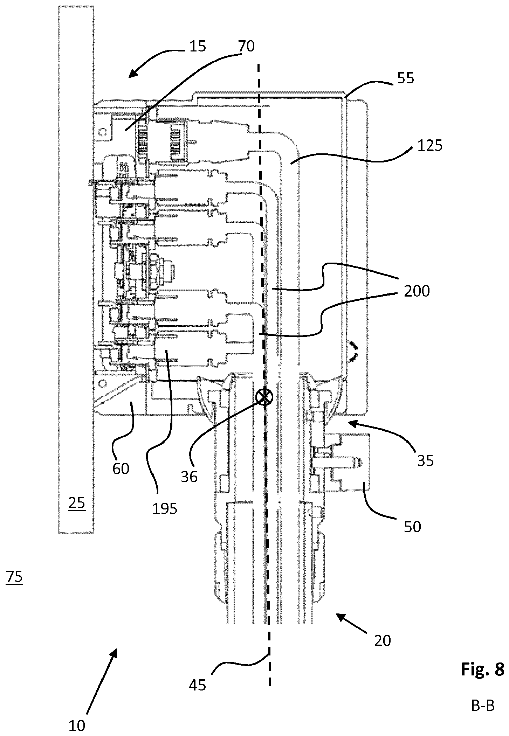

- Figur8: eine Schnittansicht entlang einer in Figur 4 gezeigten Schnittebene B-B durch das in der Figur 3 gezeigte Bediensystem;

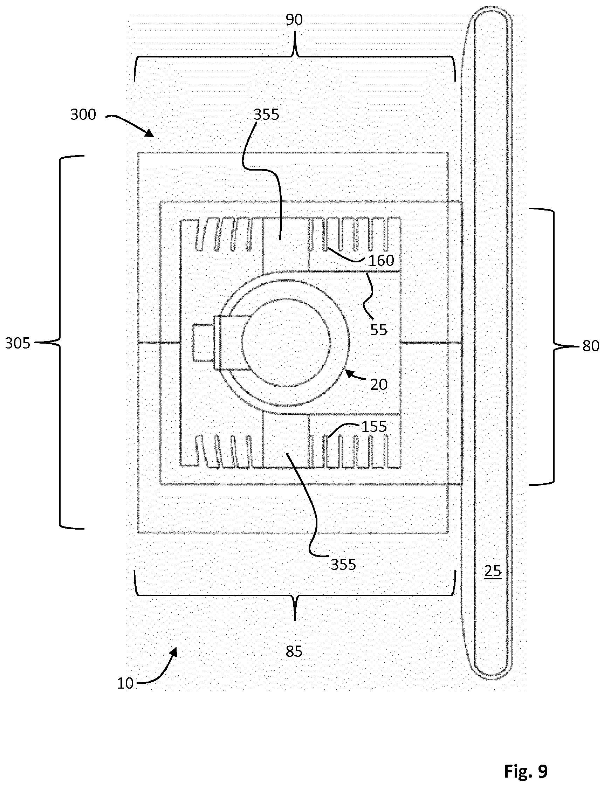

- Figur 9: eine Draufsicht auf ein Bediensystem gemäß einer zweiten Ausführungsform;

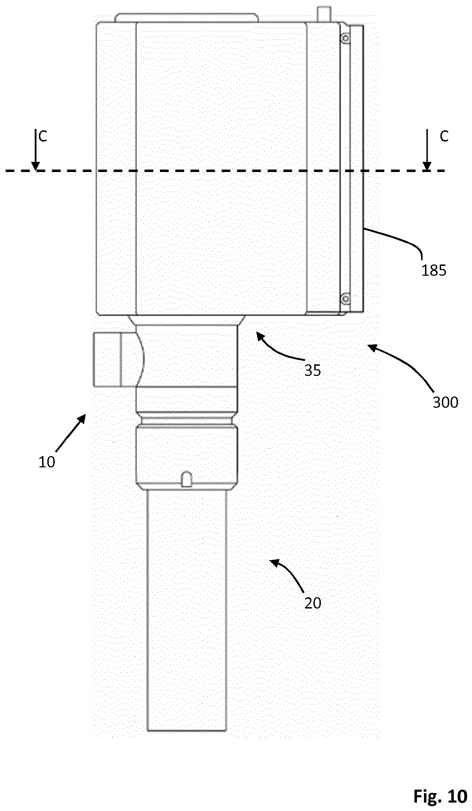

- Figur 10: eine Seitenansicht auf das in Figur 9 gezeigte Bediensystem;

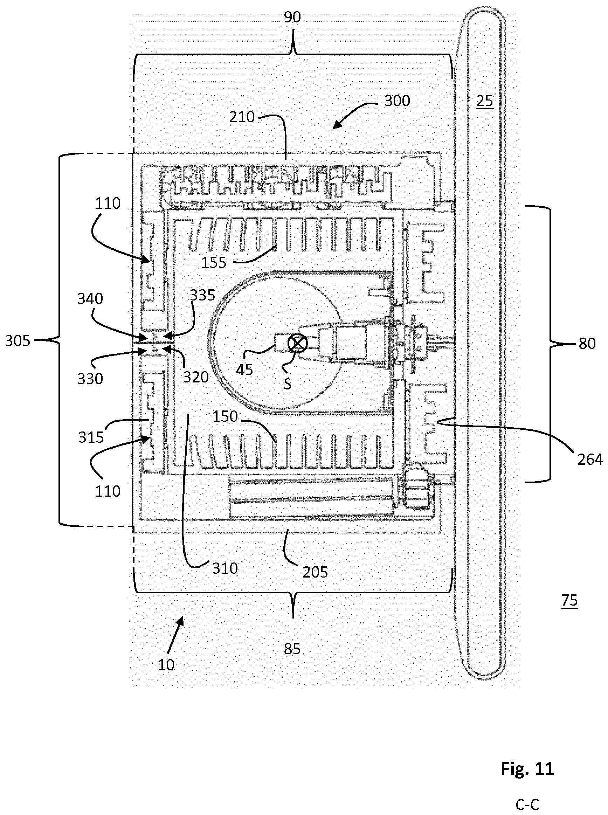

- Figur 11: eine Schnittansicht durch das in Figur 9 und 10 gezeigte Bediensystem entlang einer in Figur 10 gezeigten Schnittebene C-C.

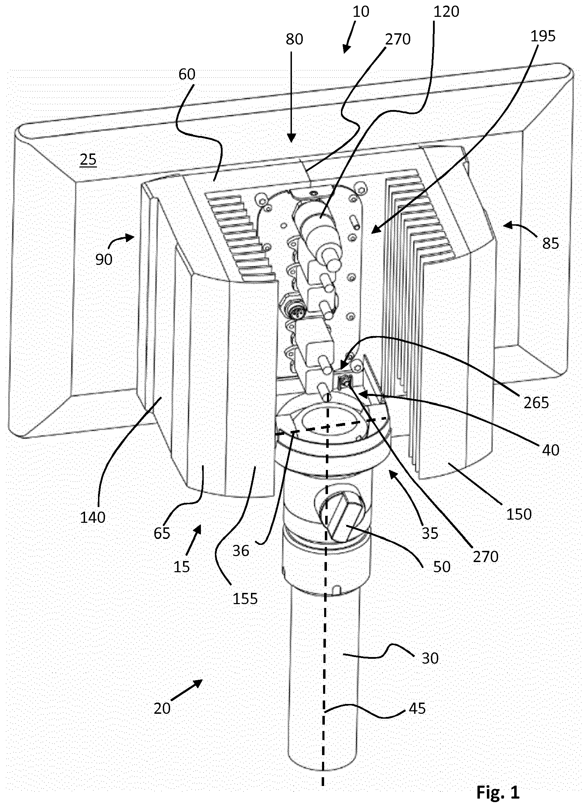

Nachfolgend sollen die Figuren 1 bis 8 zum erleichterten Verständnis gemeinsam erläutert werden.

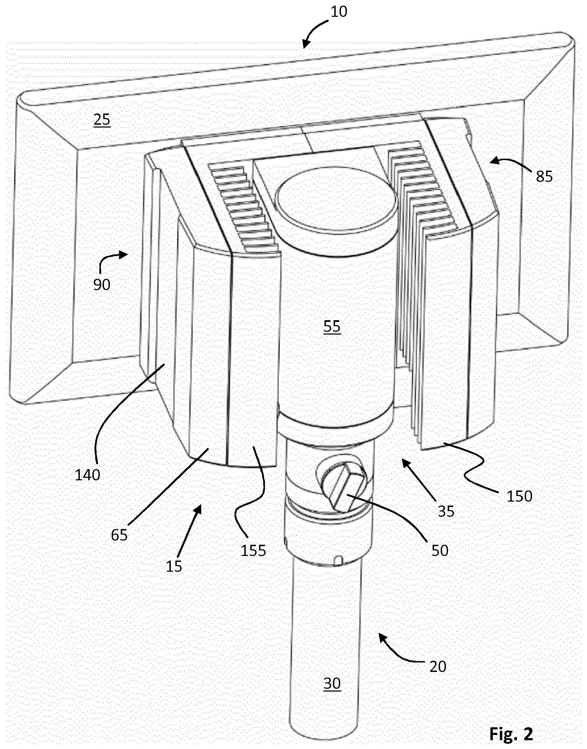

Das Bediensystem 10 (vgl. Fig. 1 und 2) weist den Rechner 15, einen Tragarm 20 und einen als Peripheriegerät ausgebildeten Bildschirm 25 auf. Der Tragarm 20 dient dazu, den Rechner 15 und den Bildschirm 25 an einer Wand oder Decke oder an einer Anlage zu befestigen. Die Anlage kann beispielsweise als Fertigungsanlage, als Werkzeugmaschine, als Gebäudesteuerungssystem oder als Automatisierungssystem ausgebildet sein, wobei mittels des Bediensystems 10 die Anlage bedient/gesteuert werden kann und/oder Informationen der Anlage visualisiert werden können.

Der Bildschirm 25 kann dabei beispielsweise als berührungssensitiver Bildschirm zur Eingabe von Informationen auf dem Bildschirm 25 ausgebildet sein. Auch ist denkbar, dass der Bildschirm ausschließlich zum Visualisieren von Informationen dient.

Der Tragarm 20 weist dabei ein Tragrohr 30, ein Gelenk 35 und einen Tragarmhalteabschnitt 40 auf. Das Gelenk 35 weist eine Gelenksachse 36 auf. Das Tragrohr 30 weist dabei eine Tragarmachse 45 auf, um die das Gelenk 35 schwenkbar ist. Das Gelenk 35 ist beispielhaft als Kugelgelenk ausgebildet und ist ferner um die Gelenkachse 36 kippbar, wobei die Gelenkachse 36 senkrecht zu der Tragarmachse 45 ausgerichtet ist. Die Tragarmachse 45 liegt dabei auf einer Längsachse des Tragrohrs 30. An dem Gelenk 35 ist zusätzlich ein Fixierungsmittel 50 vorgesehen, um eine Beweglichkeit des Gelenks 35 zu blockieren. Oberhalb des Gelenks 35 ist eine Haube 55 vorgesehen (vgl. Figur 2), die sich vom Tragarmhalteabschnitt 40 weiter nach oben in Richtung der Tragarmachse 45 erstreckt.

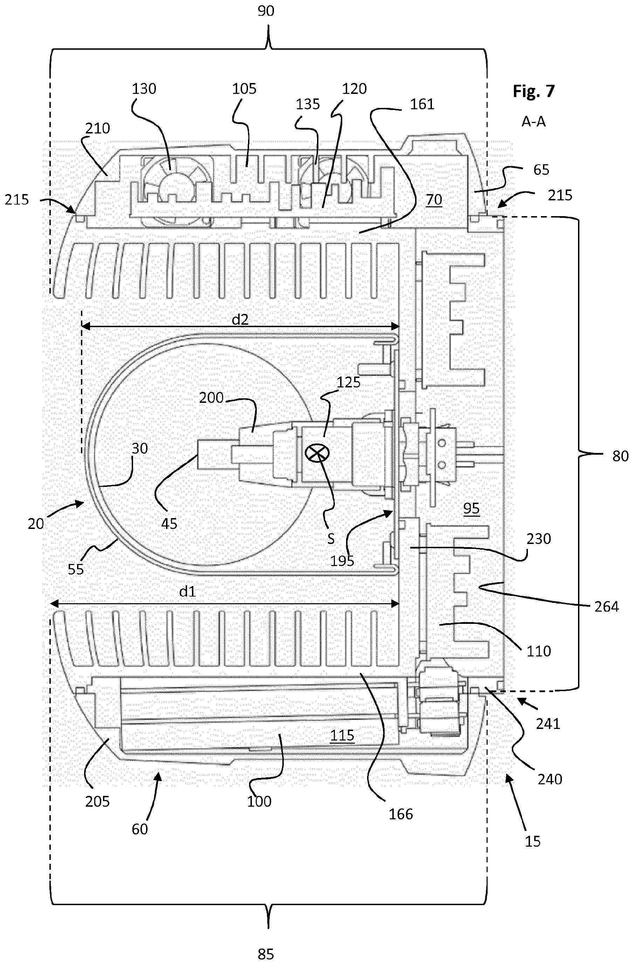

Der Rechner 15 ist teilweise zwischen dem Tragarmhalteabschnitt 40 und dem Bildschirm 25 in einer Ebene quer zur Tragarmachse 45 angeordnet. Der Rechner 15 weist dabei ein Rechnergehäuse 60 auf, das eine Gehäusewandung 65 umfasst. Die Gehäusewandung 65 umschließt dabei einen Gehäuseinnenraum 70 (vgl. Figur 7). Dabei ist die Gehäusewandung 65 derart ausgebildet, dass der Gehäuseinnenraum 70 im Wesentlichen vollständig abdichtend gegenüber einer Umgebung 75 ausgebildet ist. Dadurch kann gewährleistet werden, dass der Rechner 15 auch in Anlagen mit hohen Hygienevorschriften, beispielsweise in der Lebensmittelindustrie oder an medizinischen Gerätschaften, verwendet werden kann, um solche Anlagen mit erhöhten Hygienevorschriften zu bedienen.

Die Gehäusewandung 65 weist einen ersten Wandungsabschnitt 80, einen zweiten Wandungsabschnitt 85 und einen dritten Wandungsabschnitt 90 auf. Der erste Wandungsabschnitt 80 umschließt einen ersten Gehäuseinnenraumabschnitt 95. Der zweite Wandungsabschnitt 85 umschließt einen zweiten Gehäuseinnenraumabschnitt 100. Der dritte Wandungsabschnitt 90 umschließt einen dritten Gehäuseinnenraumabschnitt 105. Der zweite Wandungsabschnitt 85 und der dritte Wandungsabschnitt 90 sind in einer Ebene senkrecht zur Tragarmachse 45 beabstandet zueinander auf einer gemeinsamen Seite des ersten Wandungsabschnitts 80 angeordnet. Dabei sind der zweite und der dritte Wandungsabschnitt 85, 90 im Wesentlichen parallel zueinander und senkrecht zum ersten Wandungsabschnitt 80 angeordnet. Ferner grenzen der zweite und der dritte Wandungsabschnitt 85, 90 an den ersten Wandungsabschnitt 80 an. Dadurch weist das Rechnergehäuse 60 in einer Draufsicht (vgl. Figur 4) im Wesentlichen eine U-Form oder eine C-Form auf.

Zwischen dem zweiten Wandungsabschnitt 85 und dem dritten Wandungsabschnitt 90 verläuft teilweise der Tragarm 20. Dabei weisen der zweite Wandungsabschnitt 85 und der dritte Wandungsabschnitt 90 in der Ebene senkrecht zur Tragarmachse 45 ausgehend von dem ersten Wandungsabschnitt 80 eine vom ersten Wandungsabschnitt 80 wegzeigende erste maximale Erstreckung d₁ auf, die für den zweiten Wandungsabschnitt 85 und den dritten Wandungsabschnitt 90 identisch ist. Selbstverständlich können der zweite und der dritte Wandungsabschnitt 85, 90 auch unterschiedliche Erstreckungen aufweisen. Die erste maximale Erstreckung d₁ der beiden Wandungsabschnitte 85, 90 ist dabei größer als eine maximale Erstreckung d₂ des Tragrohrs 30 zu der zweiten Seitenfläche 190 senkrecht zum ersten Wandungsabschnitt 80. Dadurch kann der Tragarm 20 im Bereich des Rechners 15 durch den zweiten Wandungsabschnitt 85 und den dritten Wandungsabschnitt 90 und insbesondere das Gelenk 35 und die Haube 55 geschützt werden, sodass zum einen eine Verschmutzung des Gelenks 35 vermieden wird und zum anderen eine Beschädigung der Haube 55 vermieden wird.

Der Rechner 15 weist ein Netzgerät 110, eine Speichereinrichtung 115 und eine Leiterplatte 120 auf. Die Leiterplatte 120 ist dabei elektrisch mit dem Netzgerät 110 und der Speichereinrichtung 115 verbunden. Die Verbindungen sind in Figur 7 aus Übersichtlichkeitsgründen nicht dargestellt. Auf der Leiterplatte 120 können verschiedene Komponenten wie beispielsweise die CPU und/oder verschiedene weitere elektronische Komponenten angeordnet sein.

Das Netzgerät 110 ist dabei im ersten Gehäuseinnenraumabschnitt 95 angeordnet. Die Speichereinrichtung 115 ist im zweiten Gehäuseinnenraumabschnitt 100 angeordnet. Die Leiterplatte 120 ist im dritten Gehäuseinnenraumabschnitt 105 angeordnet. Somit ist das Netzgerät 110 bezogen auf eine Ebene senkrecht zur Tragarmachse 45 zwischen dem Bildschirm 25 und dem Tragarm 20 angeordnet.

Durch die Möglichkeit Komponenten 110, 115, 120 im zweiten und/oder dritten Gehäuseinnenraumabschnitt anzuordnen in Kombination mit der Führung des Tragarms 20 zwischen dem zweiten und dritten Wandungsabschnitt 85, 90, insbesondere nahe angrenzend an dem ersten Wandungsabschnitt 80, kann ein Schwerpunkt S des Rechners 15 besonders nahe an die Tragarmachse 45 beziehungsweise die Gelenkarmachse 36 gebracht werden, sodass bei Öffnung des Fixiermittels 50 des Gelenks 35 zur Einstellung einer Ausrichtung des Bildschirms 25 ein ungewolltes Verkippen und/oder Verdrehen des Bildschirms 25 auf einfache Weise vermieden werden kann. Auch werden im Gelenk 35 abgestützte Haltemomente und/oder Haltekräfte dadurch reduziert.

Idealerweise ist der Rechner 15 derart ausgestaltet, dass der Schwerpunkt S in einem Mittelpunkt des Gelenks 35 d.h. auf der Gelenkarmachse 36 und der Tragarmachse 45 angeordnet ist.

Dadurch wird vermieden, dass beim Öffnen des Fixierungsmittels 50 eine Ausrichtung des Bildschirms 25 und des Rechners 15 zu dem Tragarm 20 ungewollt verstellt wird.

In dem dritten Gehäuseinnenraumabschnitt 105 ist eine Lüftereinrichtung 130 vorgesehen, die angrenzend, vorteilhafterweise unterseitig, der Leiterplatte 120 angeordnet ist. Die Lüftereinrichtung 130 dient dazu, einen Kühlluftstrom zur Kühlung der Leiterplatte 120 in dem dritten Gehäuseinnenraumabschnitt 105 bereitzustellen. Um eine Wärmeübertragung zwischen dem dritten Gehäuseinnenraumabschnitt 105 und der Umgebung 75 zu erhöhen und insbesondere eine Innenraumtemperatur im dritten Gehäuseinnenraumabschnitt 105 zu reduzieren, weist der dritte Wandungsabschnitt 90 innenseitig auf einer der Leiterplatte 120 gegenüberliegenden Seite erste Kühllamellen 135 auf, die zumindest teilweise im Kühlluftstrom der Lüftereinrichtung 130 angeordnet sind. Da beispielsweise an der Leiterplatte 120 die CPU angeordnet ist, die besonders temperatursensitiv ist, ist es von besonderem Vorteil, wenn die Innenraumtemperatur mittels der ersten Kühllamellen 135 reduziert werden kann. Dabei wird ein durch die CPU beziehungsweise die Leiterplatte 120 eingebrachter Wärmeeintrag über die ersten Kühllamellen 135 an eine Außenseite 140 des dritten Wandungsabschnitts 90 transportiert.

Ferner ist an dem zweiten Wandungsabschnitt 85 auf einer dem dritten Wandungsabschnitt 90 zugewandten Seite ein ersten Kühlelement 150 angeordnet (vgl. Figuren 4 und 7). Ferner ist auf einer dem zweiten Wandungsabschnitt 85 zugewandten Seite des dritten Wandungsabschnitt 90 ein zweites Kühlelement 155 angeordnet. Das erste Kühlelement 150 weist eine Vielzahl von zweiten Kühllamellen 160 und einen ersten Kühllamellenverbindungsabschnitt 166 und das zweite Kühlelement 155 weist ebenso eine Vielzahl von dritten Kühllamellen 165 und einen zweiten Kühllamellenverbindungsabschnitt 161 auf. Die Kühllamellenverbindungsabschnitte 161, 166 befestigen die Kühllamellen 160, 165 an ihren festen Enden. Ferner begrenzen die Kühllamellenverbindungsabschnitte 161, 166 auf einer zu den Kühllamellen 160, 165 abgewandten Seite den zweiten bzw. dritten Gehäuseinnenraumabschnitt 100, 105. Die Kühlelemente 150, 155 sind achsensymmetrisch zu einer Ebene, in der die Tragarmachse 45 verläuft, angeordnet. Die zweiten und dritten Kühllamellen 160, 165 erstrecken sich dabei im Wesentlichen in Richtung des jeweils gegenüberliegenden Kühlelements 150, 155. Die zweiten und dritten Kühllamellen 160, 165 sind dabei an ihrem freien Ende 170 beabstandet zu der Haube 55 angeordnet. Dadurch wird ein hinreichend großer Luftstrom zwischen der Haube 55 und den Kühllamellen 160, 165 gewährleistet. Ferner wird gewährleistet, dass die Haube 55 auf einfache Weise montierbar ist. Dabei ist das erste Kühlelement 150 ausgebildet, einen Wärmeeintrag in den zweiten Gehäuseinnenraumabschnitt 100, der durch die Speichereinrichtung 115 in den zweiten Gehäuseinnenraumabschnitt 100 eingebracht wird, aus dem zweiten Gehäuseinnenraumabschnitt 100 herauszuführen. Das zweite Kühlelement 155 unterstützt die ersten Kühllamellen 135 in der Abführung des Wärmeeintrags durch die Leiterplatte 120 aus dem dritten Gehäuseinnenraumabschnitt 105, sodass eine zuverlässige passive Kühlung der Speichereinrichtung 115 und der Leiterplatte 120 beziehungsweise der CPU gewährleistet wird. Ferner wird durch die Ausgestaltung vermieden, dass Frischluft aus der Umgebung 75 in den Gehäuseinnenraum 70 zur Kühlung der Komponenten 110, 115, 120 des Rechners 15 gefördert werden muss. Dadurch eignet sich der Rechner 15 besonders für Anlagen mit erhöhten Hygienevorschriften. Ferner wird eine Partikelanlagerung im Rechnergehäuse 60 auf diese Weise zuverlässig vermieden.

Die Speichereinrichtung 115 ist in der Ausführungsform als Festplatte ausgebildet. Selbstverständlich ist auch denkbar, dass die Speichereinrichtung 115 andersartig, insbesondere mit einem Flashspeicher versehen, ausgebildet sein kann. Die Speichereinrichtung 115 ist in der Ausführungsform beabstandet zu dem zweiten Kühllamellenverbindungsabschnitt 166 angeordnet. Eine verbesserte Kühlung der Speichereinrichtung 115 wird gewährleistet, wenn die Speichereinrichtung 115 in flächigem Berührkontakt mit dem zweiten Kühllamellenverbindungsabschnitt 166 steht.

Auch wird darauf hingewiesen, dass die Komponenten 110, 115, 120 auch andersartig in dem Gehäuseinnenraum 70 angeordnet sein können. So ist beispielsweise durchaus denkbar, dass das Netzgerät 110 im zweiten und/oder dritten Gehäuseinnenraumabschnitt 100, 105 angeordnet ist. Auch ist denkbar, dass die Leiterplatte 120 oder die Speichereinrichtung 115 anders als in Figuren 1 bis 8 gezeigt angeordnet sind.

Der erste Wandungsabschnitt 80 weist auf einer dem zweiten und/oder dritten Wandungsabschnitt 85, 90 abgewandten Seite einen ersten Befestigungsabschnitt 175 auf (vgl. Figur 6). Der erste Befestigungsabschnitt 175 dient zur Befestigung des Bildschirms 25. Ferner ist angrenzend an den ersten Befestigungsabschnitt 175 eine erste Schnittstellenanbindung 180 an der zum zweiten und dritten Wandungsabschnitt 85, 90 abgewandten ersten Seitenfläche 185 vorgesehen. Die erste Seitenfläche 185 ist in der Ausführungsform im Wesentlichen plan ausgebildet, sodass eine große Anlagefläche für den Bildschirm 25 bereitgestellt wird. Selbstverständlich kann auch die erste Seitenfläche 185 an eine Kontur des Bildschirms 25 angepasst werden. Die erste Schnittstellenanbindung 180 dient dazu, die Leiterplatte 120 und/oder das Netzgerät 110 mit dem Bildschirm 25 zu verbinden. Dabei wird über die erste Schnittstellenanbindung 180 sowohl eine Stromversorgung des Bildschirms 25 als auch eine Datenverbindung zwischen dem Bildschirm 25 und der Leiterplatte 120 bereitgestellt.

Auf einer zur ersten Seitenfläche 185 gegenüberliegenden Seite ist eine zweite Seitenfläche 190 an dem ersten Wandungsabschnitt 80 vorgesehen, die im Wesentlichen ebenso wie die erste Seitenfläche 185 plan ausgebildet ist und beispielhaft parallel zur Tragarmachse 45 ausgerichtet ist (vgl. Figuren 1, 5, 7 und 8). Selbstverständlich ist auch denkbar, dass die erste Seitenfläche 185 und/oder die zweite Seitenfläche 190 andersartig zur Tragarmachse 45 ausgerichtet sind.

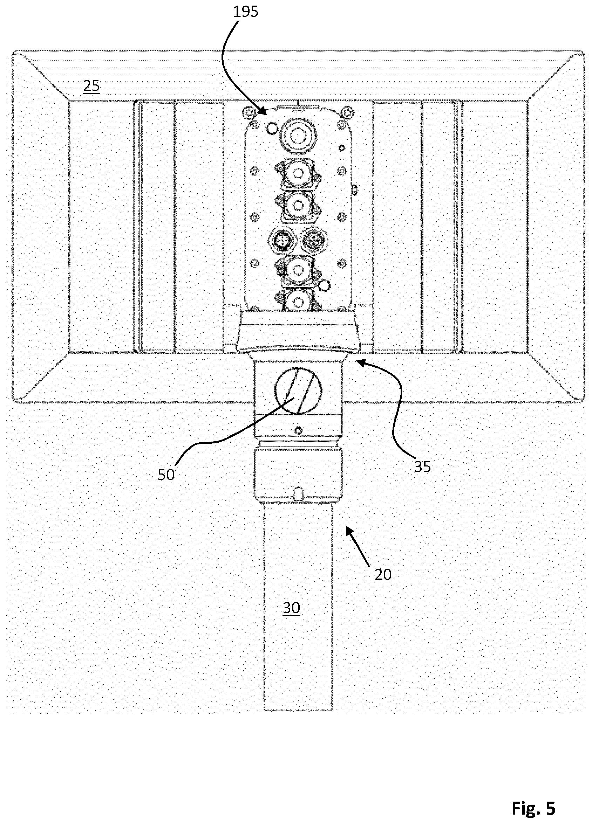

An der zweiten Seitenfläche 190 ist zwischen dem zweiten Wandungsabschnitt 85 und dem dritten Wandungsabschnitt 90 am ersten Wandungsabschnitt 80 eine zweite Schnittstellenanbindung 195 vorgesehen (vgl. Figuren 1 und 5). Die zweite Schnittstellenanbindung 195 stellt eine Verbindung zwischen dem im Gehäuseinnenraum 70 angeordneten Komponenten 110, 115, 120 und einer Versorgungsleitung 125 bereit. So ist das Netzgerät 110 über eine Versorgungsleitung 125 mit einem Stromnetz verbindbar. Dabei wird dem Netzgerät 110 elektrische Energie über die Versorgungsleitung 125 bereitgestellt. Das Netzgerät 110 stellt seinerseits die elektrische Energie der Leiterpatte 120 und der Speichereinrichtung 115 sowie dem Bildschirm 25 zur Verfügung. Zusätzlich wird über die zweite Schnittstellenanbindung 195 eine Datenverbindung zu einer Datenleitung 200 bereitgestellt. Sowohl die Versorgungsleitung 125 als auch die Datenleitung 200 werden in dem Tragarm 20 geführt, um ein Verheddern der Datenleitung 200 bzw. der Versorgungsleitung 125 zu verhindern. Selbstverständlich ist auch denkbar, dass mehrere Datenleitungen 200 an der zweiten Schnittstellenanbindung 195 angeschlossen sind, um ausreichend Informationen dem Rechner 15 bereitzustellen. Dabei können über die Datenleitungen 200 weitere Komponenten der Anlage angesteuert werden.

Der erste Wandungsabschnitt 80 kann zusätzlich auf der dem Bildschirm 20 zugewandten Seite einen Deckel aufweisen, wobei der Verbindungsabschnitt 230 und der Deckel den ersten Gehäuseinnenraumabschnitt 95 begrenzen. Alternativ ist, wie in Figur 6 gezeigt, der erste Wandungsabschnitt 80 auf der dem Bildschirm 20 zugewandeten Seite mit einer Öffnung 236 versehen, die in montiertem Zustand durch den Bildschirm 25 verschlossen wird.

Der zweite Wandungsabschnitt 85 weist ein erstes Gehäuseseitenteil 205 und der dritte Wandungsabschnitt 90 weist ein zweites Gehäuseseitenteil 210 auf. Das erste Gehäuseseitenteil 205 bzw. das zweite Gehäuseseitenteil 210 sind auf einer zum Tragarm 20 abgewandten Seite des zweiten Wandungsabschnitts 85 bzw. dritten Wandungsabschnitts 90 angeordnet. Zwischen dem Kühlelement 150, 155 und dem Gehäuseseitenteil 205, 210 kann ein erstes Dichtmittel 215 vorgesehen sein, so dass der Gehäuseinnenraum 70 gegenüber der Umgebung vor dem Eindringen von Partikeln und Fluiden geschützt ist. Beispielhaft kann das erste Dichtmittel 215 eine in dem Kühlelement 150, 155 angeordnete erste Nut aufweisen. In der ersten Nut ist ein erstes Dichtelement angeordnet. Das erste Dichtelement wird dabei durch eine Dichtfläche des Gehäuseseitenteils 205, 210 in die erste Nut gepresst. Die Gehäuseseitenteile 205, 210 sind mittels nicht dargestellter Fixierungsmittel, beispielsweise Schrauben, mit dem jeweils dem Gehäuseseitenteil 205, 210 zugeordneten Kühlrippenverbindungabschnitt 161, 166 verbunden. Die Fixierungsmittel sind dabei so an den Gehäuseseitenteilen 205, 210 angeordnet, dass die Gehäuseseitenteile 205, 210 ohne Demontage des Rechners 15 vom Tragarm 20 vom Kühlrippenverbindungsabschnitt 161, 166 in montiertem Zustand des Rechners 15 an dem Tragarm 20 gelöst werden können. Dies hat den Vorteil, dass im Betrieb des Rechners 15 Wartungsarbeiten am Rechner 15 durchgeführt werden können und beispielsweise Komponenten 110, 115, 120, insbesondere die Speichereinrichtung 115, getauscht werden können.

In der Ausführungsform ist das erste Kühlelement 150 und das zweite Kühlelement 155 über einen Verbindungsabschnitt 230 miteinander verbunden. Der Verbindungsabschnitt 230 ist dabei rechtwinklig im Wesentlichen zum ersten Kühlelement 150 und zum zweiten Kühlelement 155 angeordnet. Selbstverständlich ist auch denkbar, dass die beiden Kühlelemente 150, 155 auch schräg zu dem Verbindungsabschnitt 230 angeordnet sind. Der Verbindungsabschnitt 230 ist dabei einteilig und materialeinheitlich mit den Kühlelementen 150, 155 ausgebildet. Der Verbindungsabschnitt 230 weist dabei die zweite Seitenfläche 190 auf und nimmt die zweite Schnittstellenanbindung 195 auf. Der Verbindungsabschnitt 230 ist dabei Teil des ersten Wandungsabschnitts 80.

Um die beiden Kühlelemente 150, 155 zusammen mit dem Verbindungsabschnitt 230 besonders kostengünstig herstellen zu können, kann der Verbindungsabschnitt 230 zweiteilig ausgebildet sein, wobei eine Trennlinie 270 vorgesehen ist, die etwa parallel zur Tragarmachse 45 verläuft. Dabei kann ein erster linksseitig in Figur 1 angeordneter Abschnitt des Verbindungsabschnitts 230 mit dem ersten Kühlelement 155 und ein rechtsseitig der Trennlinie 270 angeordneter Abschnitt des Verbindungsabschnitts 230 mit dem zweiten Kühlelement 150 verbunden sein. Dadurch kann eine besonders leichte Entformung bei einem Gussverfahren zur Herstellung der Kühlelemente 150, 155 und des Verbindungsabschnitts 230 durch die Formwerkzeuge erfolgen.

Der erste Wandungsabschnitt 80 weist ferner ein Deckelseitenteil 240 auf, das sich im Wesentlichen parallel zum Kühlelement 150, 155 erstreckt. Der Gehäuseinnenraum 70 ist an dem Deckelseitenteil 240 und dem Gehäuseseitenteil mittels des ersten Dichtmittels 215 gedichtet.

Das Deckelseitenteil 240 ist zwischen dem Bildschirm 20 und dem Verbindungsabschnitt 230 angeordnet. Das Deckelseitenteil 240 weist ferner auf einer dem Bildschirm 20 zugewandten Seite ein zweites Dichtmittel 241 mit einer in dem Deckelseitenteil 240 angeordneten zweiten Nut 250 auf, in der ein zweites Dichtelement 255 angeordnet ist. Das zweite Dichtelement 255 wird mit einer Innenseite 264 des Bildschirms 25 in die zweite Nut 250 gepresst, sodass der erste Gehäuseinnenraumabschnitt 95 gegenüber der Umgebung 75 abgedichtet ist. Diese Ausgestaltung hat den Vorteil, dass das Rechnergehäuse 60 zumindest Vorschriften hinsichtlich einer Dichtheit bezüglich IP65, vorzugsweise IP67 und insbesondere auch die Vorschriften hinsichtlich IP69 auf einfache Weise und kostengünstig erfüllt. Dadurch kann ein besonders robuster Rechner 15 für ein Bediensystem 10 bereitgestellt werden, der auch in widrigen Umgebungen eingesetzte werden kann.

In der Ausführungsform (vgl. Figur 1) ist unterhalb der zweiten Schnittstellenanbindungen 195 an der zweiten Seitenfläche 190 des ersten Wandungsabschnitts 80 zwischen dem zweiten Wandungsabschnitt 85 und dem dritten Wandungsabschnitt 90 ein zweiter Befestigungsabschnitt 265 vorgesehen. Der zweite Befestigungsabschnitt 265 ist unterhalb der zweiten Schnittstellenanbindung 195 angeordnet. Der zweite Befestigungsabschnitt 265 ist mittels Haltemittel 270 mit dem Tragarmhalteabschnitt 40 verbunden. Auf diese Weise kann das Rechnergehäuse 60 auf einfache Weise an dem Tragarm 20 befestigt werden. Dabei erstreckt sich in Richtung der Tragarmachse 45 die Haube 55 im Wesentlichen zwischen dem zweiten Befestigungsabschnitt 265 und einem oberen Ende der zweiten Schnittstellenanbindung 195.

Selbstverständlich ist auch denkbar, dass zusätzliche Mittel, insbesondere ein Verbindungssteg 355, zur Befestigung des Rechnergehäuses 60 an dem Tragarm 20 vorgesehen sind.

Der Verbindungssteg 355 (vgl. Figur 4) erstreckt sich dabei zwischen dem zweiten Wandungsabschnitt 85 und dem dritten Wandungsabschnitt 90. Der Verbindungssteg 355 verbindet dabei den zweiten Wandungsabschnitt 85 mit dem Gelenk 35, beziehungsweise den dritten Wandungsabschnitt 90 mit dem Gelenk 35. Aufgrund der schalenartigen Ausgestaltung des Gelenks 35 verbindet der Verbindungssteg 355 damit auch den zweiten Wandungsabschnitt 85 mit dem dritten Wandungsabschnitt 90. Dadurch kann zum einen eine zuverlässige Einleitung von Massekräften des Rechners 15 und des Bildschirms 25 in das Gelenk 35 gewährleistet werden, zum anderen wird eine Dichtheit des Gehäuseinnenraums 70 gegenüber der Umgebung 75 durch eine Reduzierung einer Verwindung des Rechnergehäuses 60 gewährleistet.

Der Verbindungssteg 355 ist in der Ausführungsform rohrartig ausgebildet. Selbstverständlich ist auch denkbar, dass der Verbindungssteg 355 einen andersartig ausgebildeten Querschnitt, beispielsweise in L-Form, U-Form, T-Form, Dopppel-T-Form, aufweist. Auch ist denkbar, dass der Verbindungssteg 355 direkt den zweiten Wandungsabschnitt 85 mit dem dritten Wandungsabschnitt 90 verbindet.

Die in den Figuren 1 bis 8 beschriebene Ausgestaltung hat den Vorteil, dass der Schwerpunkt S des Rechners 15 durch den zweiten und dritten Wandungsabschnitt 85, 90 in Richtung dem Tragarm 20 gegenüber bekannten Rechnergehäusen verlagert ist und somit Kräfte und Momente zum Halten des Rechners 15 im Gelenk 35 reduziert werden.

Besonders vorteilhaft ist hierbei, um ein Hängenbleiben des Bedieners an einem freien Ende an dem zweiten und/oder dritten Wandungsabschnitt 85, 90 auf einer zum ersten Wandungsabschnitt 80 abgewandten Seite zu vermeiden, wenn der zweite und dritte Wandungsabschnitt 85, 90 mit einer bogenförmig ausgebildeten Kontur versehen sind . Dabei ist die Kontur derart gestaltet, dass die Kontur auf einer zum gegenüberliegenden Wandungsabschnitt 85, 90 zugewandten Seite die Kontur einen größeren Abstand zur zweiten Seitenfläche 190 aufweist als auf einer zum gegenüberliegenden Wandungsabschnitt 85, 90 abgewandten Seite. Die Kontur ist dabei im Wesentlichen als Bogensegment ausgebildet. Ferner kann dadurch zuverlässig ein Anschlagen des Bedieners am Tragarm 20 bzw. eine Beschädigung des Gelenks 35 vermieden werden.

In der Ausführungsform sind der zweite Wandungsabschnitt 85 und der dritte Wandungsabschnitt 90 im Wesentlichen senkrecht zum ersten Wandungsabschnitt 80 angeordnet. Selbstverständlich ist auch denkbar, dass die Anordnung der beiden Wandungsabschnitte 85, 90 andersartig gewählt ist. Wesentlich ist dabei jedoch, dass die beiden Wandungsabschnitte 85, 90 derart an dem ersten Wandungsabschnitt 80 angeordnet sind, dass der Tragarm 20 zumindest teilweise zwischen dem zweiten Wandungsabschnitt 85 und dem dritten Wandungsabschnitt 90 angeordnet ist.

Figur 9 zeigt eine Draufsicht auf ein Bediensystem 10 mit einem Rechnergehäuse 300 gemäß einer zweiten Ausführungsform. Figur 10 zeigt eine Seitenansicht auf das Bediensystem 10. Figur 11 zeigt eine Schnittansicht entlang einer in Figur 10 gezeigten Schnittebene C-C durch das Bediensystem 10.

Das Bediensystem 10 umfasst das alternativ ausgebildete Rechnergehäuse 300. Das Bediensystem 10 ist im Wesentlichen identisch zu dem in den Figuren 1 bis 8 gezeigten Bediensystem 10 ausgebildet. Abweichend dazu weist die Gehäusewandung 65 des Rechnergehäuses 300 einen vierten Wandungsabschnitt 305 auf, der einen vierten Gehäuseinnenraumabschnitt 315 begrenzt.

Der vierte Wandungsabschnitt 305 ist im Wesentlichen parallel zu dem ersten Wandungsabschnitt 80 angeordnet. Ferner verbindet der vierte Wandungsabschnitt 305 den zweiten Wandungsabschnitt 85 mit dem dritten Wandungsabschnitt 90 auf einer zum ersten Wandungsabschnitt 80 gegenüberliegenden Seite des zweiten Wandungsabschnitts 85 beziehungsweise des dritten Wandungsabschnitts 90. Dadurch verläuft der Tragarm 20 im Wesentlichen zwischen den Wandungsabschnitten hindurch.

Aufgrund der Ausgestaltung der Wandungsabschnitte 80, 85, 90, 305 bilden die Wandungsabschnitte 80, 85, 90, 305 eine Aufnahme 310 aus, in der der Tragarm 20 verläuft. Der vierte Wandungsabschnitt 305 begrenzt einen vierten Gehäuseinnenraumabschnitt 315. In dem vierten Gehäuseinnenraumabschnitt 315 sind Komponenten des Netzgeräts 110 angeordnet. Da üblicherweise Komponenten des Netzgeräts 110 eine besonders hohe Masse aufweisen, wird dadurch gegenüber der in den Figuren 1 bis 8 gezeigten Ausgestaltung des Bediensystems 10 der Schwerpunkt S des Rechnergehäuses 300 näher an die Tragarmachse 45 gebracht, sodass die Kräfte und Momente im Gelenk 35 weiter gegenüber der in den Figuren 1 bis 8 gezeigten Ausgestaltung des Rechnergehäuses 60 reduziert werden.

Um den vierten Wandungsabschnitt 305 auszubilden, sind das erste Gehäuseseitenteil 205 und das zweite Gehäuseseitenteil 210 im Wesentlichen auf einer zum ersten Wandungsabschnitt 80 abgewandten Seite L-förmig ausgebildet. Selbiges gilt für das erste Kühlelement 150 beziehungsweise das zweite Kühlelement 155. Das erste Kühlelement 150 liegt in einem ersten Stoß 320 an dem ersten Gehäuseseitenteil 205 an. Zwischen dem ersten Gehäuseseitenteil 205 und dem ersten Kühlelement 155 ist am ersten Stoß 320 ferner ein drittes Dichtmittel 330 mit einem dritten Dichtelement in einer dritten Nut angeordnet. Ebenso liegen das zweite Kühlelement 155 in einem zweiten Stoß 335 und das zweite Gehäuseseitenteil 210 aneinander an. Ebenso ist das zweite Kühlelement 155 und das zweite Gehäuseseitenteil 210 mittels eines vierten Dichtmittels 340 mit einer vierten Nut und einem in der vierten Nut angeordneten vierten Dichtelement abgedichtet, sodass der vierte Gehäuseinnenraumabschnitt 315 dicht gegenüber der Umgebung 75 ist. In der Ausführungsform weisen das Kühlelement 150, 155 und das Gehäuseseitenteil 205,210 im Bereich des Stoßes 320, 335 jeweils um 90° abgewinkelte Abschnitte auf, die im Wesentlichen senkrecht zu dem Bildschirm 25 ausgerichtet sind. Selbstverständlich ist auch denkbar, dass die Kühlelemente 150, 155 aneinander anstoßen und die Gehäuseseitenteile 205, 210 aneinander anstoßen, sodass ein durchgehend verlaufender vierter Gehäuseinnenraumabschnitt ausgebildet wird. Die in der Figur 9 gezeigte Ausgestaltung hat den Vorteil, dass die Kühlelemente 150, 155 sowie die Gehäuseseitenteile 205, 210 besonders kostengünstig in einem Gussverfahren hergestellt werden können.

Es wird darauf hingewiesen, dass selbstverständlich auch auf den Verbindungssteg 355 verzichtet werden kann. Selbstverständlich ist auch denkbar, dass anstatt der mittigen Lage des Verbindungsstegs 355 zwischen dem ersten Wandungsabschnitt 80 und dem vierten Wandungsabschnitt 305 der Verbindungssteg 355 auch in einer anderen Position angeordnet werden kann. Auch kann anstatt einer parallelen Ausrichtung des Verbindungsstegs 355 und der beabstandeten Anordnung zum ersten Wandungsabschnitt der Verbindungssteg 355 auch schräg zu dem ersten Wandungsabschnitt 80 ausgerichtet sein und/oder mit dem ersten Wandungsabschnitt 80 verbunden sein. Selbstverständlich ist auch denkbar, dass der Verbindungssteg 355, wie in Figur 1 gezeigt, in der in den Figuren 1 bis 8 gezeigten Ausgestaltung vorgesehen wird.

Es wird darauf hingewiesen, dass die oben beschriebenen Merkmale der verschiedenen Ausgestaltungen des Bediensystems 10 selbstverständlich auch miteinander kombiniert werden können.

Die oben beschriebene Abdichtung des Gehäuseinnenraums 70 gegenüber der Umgebung 75 mit den beschriebenen Dichtmitteln 215, 241, 330, 340 kann auch anders erfolgen, oder es kann darauf verzichtet werden.

Es wird darauf hingewiesen, dass in der Ausgestaltung die verschiedenen Komponenten der Gehäusewandung 65 mittels Schraubverbindungen (nicht dargestellt) verbunden sind. Selbstverständlich ist auch denkbar, dass die verschiedenen Komponenten der Gehäusewandung 65 andersartig miteinander verbunden sind.

## Patentansprüche

1. Rechnergehäuse (60, 300) für einen Rechner (15) eines Bediensystems (10) mit Tragarm (20) zur Bedienung, Steuerung und/oder Visualisierung einer Anlage,
- wobei eine Gehäusewandung (65) zur Umschließung eines Gehäuseinnenraums (70) mit zumindest einem ersten, einem zweiten und einem dritten Gehäuseinnenraumabschnitt (95, 100, 105) vorgesehen ist,
- wobei die Gehäusewandung (65) zumindest einen ersten Wandungsabschnitt (80), einen zweiten Wandungsabschnitt (85) und einen dritten Wandungsabschnitt (90) aufweist,
- wobei jeder Gehäuseinnenraumabschnitt (95, 100, 105) ausgebildet ist, eine Komponente (110, 115, 120) des Rechners (15) aufzunehmen,
- wobei der zweite Wandungsabschnitt (85) und der dritte Wandungsabschnitt (90) angrenzend am ersten Wandungsabschnitt (80) angeordnet sind und sich von dem ersten Wandungsabschnitt (80) weg erstrecken,
- wobei der erste Wandungsabschnitt (80) den ersten Gehäuseinnenraumabschnitt (95), der zweite Wandungsabschnitt (85) den zweiten Gehäuseinnenraumabschnitt (100) und der dritte Wandungsabschnitt (90) den dritten Gehäuseinnenraumabschnitt (105) zumindest teilweise umschließt,
- wobei der zweite Wandungsabschnitt (85) und der dritte Wandungsabschnitt (90) auf einer gemeinsamen Seite des ersten Wandungsabschnitts (80) angeordnet sind,
- wobei der zweite Wandungsabschnitt (85) und der dritte Wandungsabschnitt (90) beabstandet zueinander angeordnet sind,
- wobei zwischen dem zweiten Wandungsabschnitt (85) und dem dritten Wandungsabschnitt (90) der Tragarm (20) teilweise verlaufend anordenbar ist.

2. Rechnergehäuse (60, 300) nach Anspruch 1, wobei an wenigstens einem der Wandungsabschnitte (85, 90) ein Kühlelement (150, 155) vorgesehen ist, das ausgebildet ist, einen Wärmeeintrag durch eine zum Wandungsabschnitt korrespondierenden Gehäuseinnenraum (95, 100, 105) anordnenbare Komponente (110, 115, 120) aus dem Gehäuseinnenraum (95, 100, 105) abzuleiten und die Komponente (110, 115, 120) zu kühlen.

3. Rechnergehäuse (60, 300) nach Anspruch 1 oder 2, wobei zumindest an dem zweiten Wandungsabschnitt (85) und an dem dritten Wandungsabschnitt (90) ein Kühlelement (150, 155) vorgesehen ist, wobei jedes Kühlelement (159, 155) wenigstens eine Kühllamelle (160, 165) aufweist, wobei die Kühllamelle (160, 165) sich jeweils in Richtung des gegenüberliedenden Kühlelements (150, 155) erstreckt.

4. Rechnergehäuse (60, 300) nach einem der Ansprüche 1 bis 3, wobei der erste Wandungsabschnitt (80) auf einer dem zweiten und dritten Wandungsabschnitt (85, 90) abgewandten Seite einen ersten Befestigungsabschnitt (175) zur Befestigung eines Peripheriegeräts, insbesondere eines Bildschirms (25), und/oder eine erste Schnittstellenanbindung (180) umfasst, wobei die erste Schnittstellenanbindung (180) ausgebildet ist, eine Verbindung zwischen wenigstens einer in dem Gehäuseinnenraum (70) anordnenbaren Komponente des Rechners (15) und dem Peripheriegeräts (25) bereitzustellen.

5. Rechnergehäuse (60, 300) nach einem der Ansprüche 1 bis 4, wobei der erste Wandungsabschnitt (80) auf einer dem zweiten und/oder dritten Wandungsabschnitt (85, 90) zugewandten Seite eine zweite Schnittstellenanbindung (195) aufweist, wobei die zweite Schnittstellenanbindung (195) mit wenigstens einer der im Gehäuseinnenraum (70) anordnenbaren Komponente (110, 115, 120) des Rechners verbindbar ist.

6. Rechnergehäuse (60, 300) nach einem der Ansprüche 1 bis 5, wobei der erste Wandungsabschnitt (80) auf einer dem zweiten und/oder dritten Wandungsabschnitt (85, 90) zugewandten Seite zwischen dem zweiten und dem dritten Wandungsabschnitt (85, 90) ein zweiter Befestigungsabschnitt (265) aufweist, wobei der zweite Befestigungsabschnitt (265) ausgebildet ist, das Rechnergehäuse (60, 300) an einem Tragarm (20) einer Fertigungsanlage zu befestigen
und/oder
wobei zwischen dem zweiten Wandungsabschnitt und dem dritten Wandungsabschnitt ein Verbindungssteg (355) vorgesehen ist, der den zweiten Wandungsabschnitt (85) mit dem dritten Wandungsabschnitt (90) mechanisch koppelt, wobei vorzugsweise der Verbindungssteg (355) parallel und beabstandet zum ersten Wandungsabschnitt (80) ausgerichtet ist.

7. Rechnergehäuse (60, 300) nach einem der Ansprüche 1 bis 6, wobei der zweite und/oder dritte Wandungsabschnitt (85, 90) auf einer zum ersten Wandungsabschnitt (80) abgewandten Seite eine bogenförmig ausgebildete Kontur aufweist, wobei die Kontur auf einer zum gegenüberliedenen Wandungsabschnitt (85, 90) zugewandten Seite einen größeren Abstand zum ersten Wandungsabschnitt (80) aufweist als auf einer dem gegenüberliegenden Wandungsabschnitt (85, 90) abgewandten Seite.

8. Rechnergehäuse (60, 300) nach einem der Ansprüche 1 bis 7, wobei der zweite und/oder dritte Wandungsabschnitt (85, 90) im Wesentlichen senkrecht zu dem ersten Wandungsabschnitt (80) angeordnet ist.

9. Rechnergehäuse (300) nach einem der Ansprüche 1 bis 8, wobei die Gehäusewandung (65) einen vierten Wandungsabschnitt (305) umfasst,
- wobei der vierte Wandungsabschnitt (305) mit dem zweiten und/oder dem dritten Wandungsabschnitt (85, 90) auf einer zum ersten Wandungsabschnitt (80) gegenüberliegenden Seite verbunden ist,
- wobei der vierte Wandungsabschnitt (305) einen vierten Gehäuseinnenraumabschnitt (315) zumindest teilweise begrenzt,
- wobei der vierte Gehäuseinnenraumabschnitt (305) ausgebildet ist, wenigstens eine Komponente des Rechners (15) aufzunehmen.

10. Rechner (15) mit einem Rechnergehäuse (60; 300) nach einem der Ansprüche 1 bis 9, aufweisend wenigstens eine Speichereinrichtung (115), wenigstens ein Netzgerät (110) und wenigstens eine Leiterplatte (120) als Komponenten, wobei die Komponenten (100, 115, 120) in dem Gehäuseinnenraum (70) angeordnet sind und zumindest teilweise miteinander elektrisch verbunden sind.

11. Rechner (15) nach Anspruch 10, wobei das Netzgerät (110) zumindest teilweise in dem ersten und/oder vierten Gehäuseinnenraumabschnitt (95, 315) angeordnet ist und mit der ersten Schnittstellenanbindung (180) verbunden ist.

12. Rechner nach Anspruch 10 oder 11, wobei die Speichereinrichtung (115) und/oder die Leiterplatte (120) im zweiten und/oder dritten Gehäuseinnenraumabschnitt (85, 90) angeordnet ist.

13. Rechner (15) nach einem der Ansprüche 10 bis 12, wobei im Bereich der Leiterplatte (120) wenigstens eine Lüftereinrichtung (130) vorgesehen ist, wobei die Lüftereinrichtung (130) ausgebildet ist, einen Kühlluftstrom zur Kühlung der Leiterplatte (120) in dem zweiten und/oder dritten Gehäuseinnenraumabschnitt (85, 90) bereitzustellen.

14. Bediensystem (10) mit einem Rechner (15) nach einem der Ansprüche 10 bis 13 und einem Tragarm (20), wobei der Tragarm (20) zumindest teilweise zwischen dem zweiten und dem dritten Wandungsabschnitt (85, 90) geführt ist, wobei der Tragarm (20) an dem zweiten Befestigungsabschnitt (266) mit dem Rechnergehäuse (60) verbunden ist, wobei vorzugsweise der Tragarm (20) ein Gelenk (35) umfasst, um den Rechner (15) um eine Tragarmachse (45) zu schwenken und/oder um eine Gelenkachse (36) zu verkippen.

15. Bediensystem (10) nach Anspruch 14, wobei ein Peripheriegerät, insbesondere ein Bildschirm (25), vorgesehen ist, wobei das Peripheriegerät an dem ersten Befestigungsabschnitt (175) mit dem Rechnergehäuse (60) verbunden ist,
und/oder
wobei der zweite und/oder der dritte Wandungsabschnitt (85, 90) eine maximale Erstreckung (d₁) senkrecht zum ersten Wandungsabschnitt (80) aufweist, die größer ist, als eine maximaler Abstand (d₂) des Tragarms (20) zu dem ersten Wandungsabschnitt (80) senkrecht zum ersten Wandungsabschnitt (80),
und/oder
wobei an dem Tragarm (20) eine Haube (55) vorgesehen ist, wobei die Haube (55) ausgebildet ist, den zweiten Befestigungsabschnitt (265) und/oder die zweite Schnittstellenanbindung (195) zumindest teilweise zu überdecken.

## Claims

1. Computer case (60, 300) for a computer (15) of an operator control system (10) having a supporting arm (20) for operating, controlling and/or visualizing an installation,
- wherein a case wall (65) is provided for the purpose of surrounding a case interior (70) having at least a first, a second and a third case interior section (95, 100, 105),
- wherein the case wall (65) comprises at least a first wall section (80), a second wall section (85) and a third wall section (90),
- wherein each case interior section (95, 100, 105) is configured to accommodate a component (110, 115, 120) of the computer (15),
- wherein the second wall section (85) and the third wall section (90) are arranged adjacent to the first wall section (80) and extend away from the first wall section (80),
- wherein the first wall section (80) at least partially surrounds the first case interior section (95), the second wall section (85) at least partially surrounds the second case interior section (100) and the third wall section (90) at least partially surrounds the third case interior section (105),
- wherein the second wall section (85) and the third wall section (90) are arranged on a common side of the first wall section (80),
- wherein the second wall section (85) and the third wall section (90) are arranged at a distance from one another,
- wherein the supporting arm (20) can be arranged in a manner partially running between the second wall section (85) and the third wall section (90).

2. Computer case (60, 300) according to Claim 1, wherein a cooling element (150, 155) is provided on at least one of the wall sections (85, 90) and is configured to dissipate heat input by a component (110, 115, 120), which can be arranged in the case interior (95, 100, 105) corresponding to the wall section, from the case interior (95, 100, 105) and to cool the component (110, 115, 120).

3. Computer case (60, 300) according to Claim 1 or 2, wherein a cooling element (150, 155) is provided at least on the second wall section (85) and on the third wall section (90), wherein each cooling element (159, 155) comprises at least one cooling fin (160, 165), wherein the cooling fin (160, 165) respectively extends in the direction of the opposite cooling element (150, 155).

4. Computer case (60, 300) according to any one of Claims 1 to 3, wherein the first wall section (80) comprises, on a side facing away from the second and third wall sections (85, 90), a first fastening section (175) for fastening a peripheral device, in particular a screen (25), and/or a first interface connection (180), wherein the first interface connection (180) is configured to provide a link between at least one component of the computer (15) that can be arranged in the case interior (70) and the peripheral device (25).

5. Computer case (60, 300) according to any one of Claims 1 to 4, wherein the first wall section (80) comprises a second interface connection (195) on a side facing the second and/or third wall section (85, 90), wherein the second interface connection (195) can be connected to at least one of the components (110, 115, 120) of the computer which can be arranged in the case interior (70).

6. Computer case (60, 300) according to any one of Claims 1 to 5, wherein the first wall section (80) comprises a second fastening section (265) on a side facing the second and/or third wall section (85, 90) between the second and the third wall section (85, 90), wherein the second fastening section (265) is configured to fasten the computer case (60, 300) to a supporting arm (20) of a production installation, and/or
wherein a connecting web (355) is provided between the second wall section and the third wall section and mechanically couples the second wall section (85) to the third wall section (90), wherein the connecting web (355) is preferably oriented parallel to and at a distance from the first wall section (80).

7. Computer case (60, 300) according to any one of Claims 1 to 6, wherein the second and/or third wall section (85, 90) has an arcuate contour on a side facing away from the first wall section (80), wherein the contour is at a greater distance from the first wall section (80) on a side facing the opposite wall section (85, 90) than on a side facing away from the opposite wall section (85, 90).

8. Computer case (60, 300) according to any one of Claims 1 to 7, wherein the second and/or third wall section (85, 90) is arranged substantially perpendicular to the first wall section (80).

9. Computer case (300) according to any one of Claims 1 to 8, wherein the case wall (65) comprises a fourth wall section (305),
- wherein the fourth wall section (305) is connected to the second and/or the third wall section (85, 90) on a side opposite the first wall section (80),
- wherein the fourth wall section (305) at least partially bounds a fourth case interior section (315),
- wherein the fourth case interior section (305) is configured to accommodate at least one component of the computer (15).

10. Computer (15) having a computer case (60; 300) according to any one of Claims 1 to 9, comprising at least one memory device (115), at least one power supply unit (110) and at least one circuit board (120) as components, wherein the components (100, 115, 120) are arranged in the case interior (70) and are at least partially electrically connected to one another.

11. Computer (15) according to Claim 10, wherein the power supply unit (110) is at least partially arranged in the first and/or fourth case interior section (95, 315) and is connected to the first interface connection (180).

12. Computer according to Claim 10 or 11, wherein the memory device (115) and/or the circuit board (120) is/are arranged in the second and/or third case interior section (85, 90).

13. Computer (15) according to any one of Claims 10 to 12, wherein at least one fan device (130) is provided in the region of the circuit board (120), wherein the fan device (130) is configured to provide a cooling air flow for cooling the circuit board (120) in the second and/or third case interior section (85, 90).

14. Operator control system (10) having a computer (15) according to any one of Claims 10 to 13 and a supporting arm (20), wherein the supporting arm (20) is at least partially guided between the second and the third wall section (85, 90), wherein the supporting arm (20) is connected to the computer case (60) in the second fastening section (266), wherein the supporting arm (20) preferably comprises an articulation (35) in order to pivot the computer (15) about a supporting arm axis (45) and/or to tilt it about an articulation axis (36).

15. Operator control system (10) according to Claim 14, wherein a peripheral device, in particular a screen (25), is provided, wherein the peripheral device is connected to the computer case (60) in the first fastening section (175),
and/or
wherein the second and/or the third wall section (85, 90) has a maximum extent (d₁) perpendicular to the first wall section (80), which extent is greater than a maximum distance (d₂) between the supporting arm (20) and the first wall section (80) perpendicular to the first wall section (80), and/or
wherein a hood (55) is provided on the supporting arm (20), wherein the hood (55) is configured to at least partially cover the second fastening section (265) and/or the second interface connection (195).

## Revendications

1. Boîtier d'ordinateur (60, 300) destiné à un ordinateur (15) d'un système de fonctionnement (10) doté d'un bras de support (20) pour le fonctionnement, la commande et/ou la visualisation d'une installation,
- dans lequel une paroi de boîtier (65) est prévue afin de délimiter un espace intérieur (70) doté d'au moins une première, une deuxième et une troisième section d'espace intérieur (95, 100, 105),
- dans lequel la paroi de boîtier (65) comporte au moins une première section de paroi (80), une deuxième section de paroi (85) et une troisième section de paroi (90),
- dans lequel chaque section d'espace intérieur (95, 100, 105) est conçue pour accueillir un composant (110, 115, 120) de l'ordinateur (15),
- dans lequel la deuxième section de paroi (85) et la troisième section de paroi (90) sont agencées de manière adjacente à la première section de paroi (80) et s'éloignent de la première section de paroi (80),
- dans lequel la première section de paroi (80) entoure au moins partiellement la première section d'espace intérieur (95), la deuxième section de paroi (85) entoure au moins partiellement la deuxième section d'espace intérieur (100) et la troisième section de paroi (90) entoure au moins partiellement la troisième section d'espace intérieur (105),
- dans lequel la deuxième section de paroi (85) et la troisième section de paroi (90) sont agencées sur un même côté de la première section de paroi (80),
- dans lequel la deuxième section de paroi (85) et la troisième section de paroi (90) sont agencées pour être écartées l'une par rapport à l'autre,
- dans lequel le bras de support (20) peut être agencé pour s'étendre partiellement entre la deuxième section de paroi (85) et la troisième section de paroi (90).

2. Boîtier d'ordinateur (60, 300) selon la revendication 1, dans lequel un élément de refroidissement (150, 155) est prévu sur au moins une des sections de paroi (85, 90), conçu pour dériver hors de l'espace intérieur du boîtier (95, 100, 105) un apport thermique d'un composant (110, 115, 120) pouvant être agencé dans l'espace intérieur (95, 100, 105) correspondant à la section de paroi et pour refroidir le composant (110, 115, 120).

3. Boîtier d'ordinateur (60, 300) selon la revendication 1 ou 2, dans lequel un élément de refroidissement (150, 155) est prévu au moins sur la deuxième section de paroi (85) et sur la troisième section de paroi (90), dans lequel chaque élément de refroidissement (159, 155) comporte au moins une lamelle de refroidissement (160, 165), dans lequel la lamelle de refroidissement (160, 165) s'étend respectivement dans la direction de l'élément de refroidissement (150, 155) opposé.

4. Boîtier d'ordinateur (60, 300) selon l'une des revendications 1 à 3, dans lequel la première section de paroi (80) comprend sur un côté détourné des deuxième et troisième sections de paroi (85, 90) une première section de fixation (175) destinée à fixer un périphérique, en particulier un écran (25), et/ou un premier connecteur d'interface (180), dans lequel le premier connecteur d'interface (180) est conçu pour établir une connexion entre au moins un composant de l'ordinateur (15) pouvant être agencé dans l'espace intérieur (70) et le périphérique (25).

5. Boîtier d'ordinateur (60, 300) selon l'une des revendications 1 à 4, dans lequel la première section de paroi (80) comprend sur un côté faisant face à la deuxième et/ou à la troisième section de paroi (85, 90) un deuxième connecteur d'interface (195), dans lequel le deuxième connecteur d'interface (195) peut être connecté avec au moins un des composants (110, 115, 120) de l'ordinateur pouvant être agencés dans l'espace intérieur (70).

6. Boîtier d'ordinateur (60, 300) selon l'une des revendications 1 à 5, dans lequel la première section de paroi (80) comprend sur un côté faisant face à la deuxième et/ou à la troisième section de paroi (85, 90) une deuxième section de fixation (265) entre la deuxième et la troisième section de paroi (85, 90), dans lequel la deuxième section de fixation (265) est conçue pour fixer le boîtier d'ordinateur (60, 300) à un bras de support (20) d'une installation de fabrication
et/ou
dans lequel un pont de connexion (355) est prévu entre la deuxième et la troisième section de paroi, couplant mécaniquement la deuxième section de paroi (85) et la troisième section de paroi (90), dans lequel le pont de connexion (355) est de préférence orienté parallèlement à la première section de paroi (80) et écarté de celle-ci.

7. Boîtier d'ordinateur (60, 300) selon l'une des revendications 1 à 6, dans lequel la deuxième et/ou la troisième section de paroi (85, 90) comportent sur un côté détourné de la première section de paroi (80) un contour formé de manière convexe, dans lequel le contour comporte sur un côté faisant face à la section de paroi opposée (85, 90) un écart par rapport à la première section de paroi (80) supérieur à l'écart sur un côté détourné de la section de paroi opposée (85, 90).

8. Boîtier d'ordinateur (60, 300) selon l'une des revendications 1 à 7, dans lequel la deuxième et/ou la troisième section de paroi (85, 90) sont agencées de manière essentiellement perpendiculaires à la première section de paroi (80).

9. Boîtier d'ordinateur (300) selon l'une des revendications 1 à 8, dans lequel la paroi de boîtier (65) comprend une quatrième section de paroi (305),
- dans lequel la quatrième section de paroi (305) est reliée à la deuxième et/ou la troisième section de paroi (85, 90) sur un côté opposé à la première section de paroi (80),
- dans lequel la quatrième section de paroi (305) délimite au moins partiellement une quatrième section d'espace intérieur (315),
- dans lequel la quatrième section d'espace intérieur (305) est conçue pour accueillir au moins un composant de l'ordinateur (15).

10. Ordinateur (15) doté d'un boîtier d'ordinateur (60 ; 300) selon l'une des revendications 1 à 9, comprenant comme composants au moins une unité d'enregistrement (115), au moins une alimentation (110) et au moins un circuit imprimé (120), dans lequel les composants (100, 115, 120) sont agencés dans le boîtier (70) et sont connectés électriquement l'un à l'autre au moins partiellement.

11. Ordinateur (15) selon la revendication 10, dans lequel l'alimentation (110) est au moins partiellement agencée dans la première et/ou la quatrième section d'espace intérieur (95, 315) et est reliée au premier connecteur d'interface (180).

12. Ordinateur selon la revendication 10 ou 11, dans lequel l'unité d'enregistrement (115) et/ou le circuit imprimé (120) sont agencés dans la deuxième et/ou la troisième section d'espace intérieur de boîtier (85, 90).

13. Ordinateur (15) selon l'une des revendications 10 à 12, dans lequel au moins une entrée d'air (130) est prévue dans les environs du circuit imprimé (120), dans lequel l'entrée d'air (130) est conçue pour établir un courant d'air frais afin de refroidir le circuit imprimé (120) dans la deuxième et/ou la troisième section d'espace intérieur de boîtier (85, 90).

14. Système de fonctionnement (10) doté d'un ordinateur (15) selon l'une des revendications 10 à 13 et d'un bras de support (20), dans lequel le bras de support (20) est guidé au moins partiellement entre la deuxième et la troisième section de paroi (85, 90), dans lequel le bras de support (20) est raccordé avec le boîtier d'ordinateur (60) à la deuxième section de fixation (266), dans lequel le bras de support (20) comprend de préférence une articulation (35), afin de faire pivoter l'ordinateur (15) autour d'un axe de bras de support (45) et/ou basculer un axe d'articulation (36).

15. Système de fonctionnement (10) selon la revendication 14, dans lequel est prévu un périphérique, en particulier un écran (25), dans lequel le périphérique est raccordé avec le boîtier d'ordinateur (60) à la première section de fixation (175),
et/ou
dans lequel la deuxième et/ou la troisième section de paroi (85, 90) comportent une étendue maximale (d₁) perpendiculaire à la première section de paroi (80), supérieure à l'écart maximal (d₂) du bras (20) à la première section de paroi (80), perpendiculairement à la première section de paroi (80),
et/ou
dans lequel est prévu sur le bras de support (20) un capot (55), dans lequel le capot (55) est conçu pour recouvrir au moins partiellement la deuxième section de fixation (265) et/ou le deuxième connecteur d'interface (195).
